# EUROPÄISCHE PATENTANMELDUNG

(11) **EP 2 660 672 A2**
(43) Veröffentlichungstag der Anmeldung: **06.11.2013**
(21) Anmeldenummer: 13002204.9
(22) Anmeldetag: 25.04.2013
(51) Int. Cl.: G05B 19/418, G05B 19/409

(54) **Mobile Einheit zur Bereitstellung von produktionsanlagespezifischen Funktionen**

(30) Priorität: 02.05.2012 CH 613122012
(71) Anmelder: Ferag AG, 8340 Hinwil (CH)
(72) Erfinder: Groth, Uwe, 8340 Hinwil (CH)
(74) Vertreter: Rentsch Partner AG

(57) **Zusammenfassung**

Die Erfindung bezieht sich auf eine mobile Einheit (1), welche produktionsanlagespezifische Funktionen bereitstellt. Die mobile Einheit (1) umfasst ein Positionsmodul (11) zur Ermittlung der räumlichen Position der mobilen Einheit (1), ein Sektormodul (12) um aufgrund der ermittelten Position der mobilen Einheit (1) einen Sektor (2.1, 2.2, 2.3, 2.4) zu ermitteln aus einem oder mehreren nicht überlappenden Sektoren (2.1, 2.2, 2.3, 2.4) der Produktionsanlage, und ein Bereitstellungsmodul (13) zur Bereitstellung von produktionsanlagespezifischen Funktionen der mobilen Einheit (1) in Abhängigkeit des ermittelten Sektors (2.1, 2.2, 2.3, 2.4).

## Beschreibung

### TECHNISCHES GEBIET

Die Erfindung bezieht sich auf eine mobile Einheit, welche produktionsanlagespezifische Funktionen bereitstellt, sowie auf ein Verfahren zum Bereitstellen von produktionsanlagespezifischen Funktionen auf einer mobilen Einheit.

### STAND DER TECHNIK

Produktionsanlagen wie beispielsweise Produktverarbeitungsanlagen oder Druckproduktverarbeitungsanlagen sind hochkomplexe und weitläufige Anlagen, die zum Teil in sehr grossen Bauten, oftmals in mehreren Gebäuden und Räumen, angeordnet sind. Zur Steuerung von Produktionsanlagen sind sowohl zentrale Steuereinheiten als auch mobile Steuereinheiten bekannt. Mobile Steuereinheiten können vom Bedienpersonal zur Bedienung von Produktionsanlagen mitgetragen werden, um beispielsweise einen Anlagenteil in Augenschein zu nehmen und die Anlage zugleich zu steuern. So kann beispielsweise vor Ort ein Anlagenteil ausser Betrieb genommen werden, um eine Reparatur oder um Servicearbeiten durchzuführen.

Die EP 1 920 928 zeigt eine bewegliche Steuereinrichtung zur Bedienung einer Maschine, welche für die Verarbeitung von Bedruckstoffen vorgesehen ist. Die Maschine ist in mehrere Zonen unterteilt. Die Position der Steuereinrichtung ist in Bezug auf die mehreren Zonen erfassbar, wobei anhand der Position der Steuereinrichtung diejenige Zone ermittelbar ist, in der sich die Steuereinrichtung befindet. Dies kann durch Ermittlung der Entfernung zu mehreren Empfängern an der Maschine geschehen. In Abhängigkeit der ermittelten Zone sind bestimmte Funktionen der Maschine freigeschaltet oder gesperrt. Ein tragbarer Computer kann einen RFID Chip (RFID: Radio Frequency Identification) aufweisen. Die Reichweite kann so eingestellt werden, dass sie nicht über die vorgesehenen Zonenbereiche hinaus reicht. Die Zonen überlappen sich zumindest teilweise, wobei in den überlappenden Bereichen die Bedienung von zwei oder mehreren Teilbereichen der Maschine möglich ist. Funktionen können benutzerspezifisch frei geschaltet oder gesperrt werden.

Die EP 1 247 656 zeigt eine Anlage welche Maschinen aufweist mit mehreren Bearbeitungsstationen, die eine Produktlinie bilden. Eine Steuervorrichtung ist zur Steuerung der Bearbeitungsstationen vorgesehen. Ein frei bewegliches Eingabemittel wie z.B. ein Mobiltelefon ist zum Bedienen der Bearbeitungsstationen durch die Steuervorrichtung vorgesehen. Der Ort oder die relative Lage des Eingabemittels zu den Bearbeitungsstationen ist automatisch erkennbar. Zur Positionserkennung kann jede zu bedienende Bearbeitungsstation mit einem Codeleser versehen sein, der das Gerät in einem bestimmten Bereich der Umgebung erkennt und dies der Steuerung meldet. Alternativ sind die Bearbeitungsstationen mit einem Codeträger versehen und ein Codeleser ist am Eingabemittel vorgesehen. Die Positionserkennung kann über GPS erfolgen (GPS: Global Positioning System). Die Handlungsberechtigung eines Bedieners ist in einer Datenbank hinterlegt.

Die EP 0 243 811 zeigt eine mobile Einrichtung zum drahtlosen Ansteuern von Rotationsdruckmaschinen. Zur Erhöhung der Übertragungssicherheit sind Zwischenverstärker und Modulationsverfahren vorgesehen. Die mobile Einrichtung sendet ein Signal aus, welches von einem Empfänger zurückgesendet wird. Im Falle einer Übereinstimmung sendet die mobile Einheit eine Quittierung aus, wobei ein Steuerungsbefehl aktiviert wird. Um aus abgelegenen Teilen sicher Kommandos geben zu können, werden die Signale von Relaisstationen weitergeleitet. Die Signale sind gepulste elektromagnetische Wellen, Lichtstrahlung, Infrarotwellen oder Ultraschallwellen.

### DARSTELLUNG DER ERFINDUNG

Es ist eine Aufgabe der vorliegenden Erfindung eine mobile Einheit vorzuschlagen, welche produktionsanlagespezifische Funktionen bereitstellt, sowie ein Verfahren zum Bereitstellen von produktionsanlagespezifischen Funktionen auf einer mobilen Einheit vorzuschlagen, welche zumindest einige Nachteile des Standes der Technik nicht aufweisen. Es ist insbesondere eine Aufgabe der vorliegenden Erfindung eine mobile Einheit vorzuschlagen, welche produktionsanlagespezifische Funktionen bereitstellt, sowie ein Verfahren zum Bereitstellen von produktionsanlagespezifischen Funktionen auf einer mobilen Einheit vorzuschlagen, um produktionsanlagespezifische Funktionen bedarfsgerecht bereitzustellen, wobei Produktionsanlagen insbesondere rasch und kostengünstig ausgerüstet werden können, um auf der mobilen Einheit eine bedarfsgerechte Bereitstellung von Funktionen zu ermöglichen.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Eine mobile Einheit, welche produktionsanlagespezifische Funktionen bereitstellt, umfasst: ein Positionsmodul, welches eingerichtet ist, eine räumliche Position der mobilen Einheit zu ermitteln, ein Sektormodul, welches eingerichtet ist, um aufgrund der ermittelten Position der mobilen Einheit einen Sektor zu ermitteln aus mehreren nicht überlappenden Sektoren der Produktionsanlage, und ein Bereitstellungsmodul, welches eingerichtet ist, die produktionsanlagespezifischen Funktionen der mobilen Einheit in Abhängigkeit des ermittelten Sektors bereitzustellen. Die Position wird durch geeignete Daten beschrieben, beispielsweise durch Koordinatendaten einer geometrischen Fläche, eines geometrischen Körpers oder eines Punkts. Die Sektoren werden ebenfalls durch geeignete Daten beschreiben, beispielsweise wiederum durch Koordinatendaten einer geometrischen Fläche, eines geometrischen Körpers oder eines Punkts. Bei der Ermittlung eines Sektors werden die Daten welche die Position der mobilen Einheit beschreiben mit den Daten verglichen, welche die Sektoren beschreiben. Es wird derjenige Sektor ermittelt, bei welchem die Position der mobilen Einheit mit dem Sektor zusammenfällt, sich mit diesem überschneidet, davon umschlossen wird oder diesen berührt, wobei die Daten, welche die Position der mobilen Einheit sowie die Sektoren beschreiben für den Vergleich herangezogen werden. Dem entsprechenden Sektor sind Funktionen zugeordnet, welche insbesondere durch Funktionen definiert sind, welche sich an der Produktionsanlage beim betreffenden Sektor durchführen lassen. Auf der mobilen Einheit werden die entsprechenden Funktionen bereitgestellt, so dass der Benutzer, welcher sich mit der mobilen Einheit im betreffenden Sektor befindet, die für den Sektor produktionsanlagespezifischen Funktionen ausführen kann. Das Ausführen der Funktionen erfolgt beispielsweise über eine drahtlose Schnittstelle der mobilen Einheit, beispielsweise zu einer entsprechenden drahtlosen Schnittstelle einer zentralen Steuerung der Produktionsanlage oder direkt zu einer Einrichtung, welche sich beim betreffenden Sektor befindet. Eine Produktionsanlage erstreckt sich beispielsweise über einen gesamten Produktionsstandort wie z.B. ein gesamtes Werkareal und weist z.B. eine Vielzahl mehrstöckige Gebäude auf. In einer Ausführungsform erstreckt sich die Produktionsanlage über eine Ansammlung von mehreren Gebäuden. In einer Ausführungsform erstreckt sich die Produktionsanlage über ein einzelnes Gebäude. In einer Ausführungsvariante erstreckt sich die Produktionsanlage auf eine Halle oder einen einzelnen Raum in einem Gebäude.

In einer Ausführungsform ist das Positionsmodul eingerichtet zur Ermittlung der Position der mobilen Einheit aufgrund von mittels elektromagnetischer Wellen aktivierbaren und detektierbaren, verteilten Markierelementen wie insbesondere RFID-Tags (RFID: Radio Frequency Identification) oder Tags einer NFC Technologie (NFC: Near Field Communication). Markierelemente wie RFID-Tags sind billig und unkompliziert in der Handhabung. Sie benötigen keine drahtgebundene Verbindung zu einer Steuereinrichtung und sind autark. Sie können Sensoren, Energiepuffer, Energiespeicher, etc. aufweisen und Energie sowie Informationen aufnehmen bzw. abgeben. Die Informationen können sie auf Abfrage abgeben, im Falle von Sensoren können auch Sensorwerte wie Temperatur, Feuchtigkeit etc. abgegeben werden. Die Markierelemente können mit oder ohne interne Stromversorgung ausgeführt sein und können an einer Produktionsanlage schnell und kostengünstig angebracht werden, insbesondere ist ein flexibles Anbringen und wieder Entfernen einfach möglich. In unkritischen Bereichen, z.B. falls die Übersicht an der Produktionsanlage gut ist, genügt oftmals ein einzelnes Markierelement um die Position der mobilen Einheit genügend genau zu ermitteln, damit ein Sektor ermittelt und die produktionsanlagespezifische Funktionen auf der mobilen Einheit an diesem Sektor bereitgestellt werden können. Bei kritischen Bereichen, z.B. falls die Produktionsanlage oder Teile davon gut einsehbar sein müssen, können mehrere Markierelemente angebracht werden, um die Position der mobilen Einheit genügend genau zu bestimmen und sicherzustellen, dass nur in einem exakt definierten Sektor produktionsanlagespezifische Funktionen bereitgestellt werden.

Bei einer Produktionsanlage können gleichzeitig mehrere mobile Einheiten von mehreren Benutzern eingesetzt werden, wobei produktionsanlagespezifische Funktionen entsprechend dem aktuellen Standort der einzelnen mobilen Einheiten bereitgestellt werden. In einer Ausführungsform werden die produktionsanlagespezifischen Funktionen benutzerspezifisch bereitgestellt, so dass für Benutzer welche unterschiedliche Aufgaben zu erledigen haben in einem bestimmten Sektor unterschiedliche Funktionen bereitgestellt werden.

In einer Ausführungsform ist das Positionsmodul eingerichtet die Position der mobilen Einheit zu ermitteln aufgrund einer Veränderung einer Sendeleistung eines Senders zur Ausstrahlung einer elektromagnetischen Welle. Insbesondere im Falle von Markierelementen wie RFID-Tags kann durch die Reduktion und Erhöhung der Sendeleistung der Empfangsbereich verändert werden und die Ermittlung der Position der mobilen Einheit verbessert werden, da je nach Sendeleistung unterschiedliche und unterschiedliche viele Markierelemente für die Ermittlung der Position der mobilen Einheit herangezogen werden.

In einer Ausführungsform ist das Positionsmodul eingerichtet ist die Position der mobilen Einheit zu ermitteln aufgrund einer Veränderung einer Frequenz eines Senders zur Ausstrahlung einer elektromagnetischen Welle. Die an der Produktionsanlage angeordneten Markierelemente sind beispielsweise durch unterschiedliche Frequenzen aktivierbar und detektierbar. So können erste Markierelemente angeordnet sein, welche sich durch eine erste Frequenz aktivieren und detektieren lassen, und zweite Markierelemente, welche sich durch eine zweite Frequenz aktivieren und detektieren lassen. Mit der ersten Frequenz wird beispielsweise die Position der mobilen Einheit ermittelt, falls nur Überwachungsfunktionen auf der mobilen Einheit bereitgestellt werden sollen. In diesem Fall genügt beispielsweise eine ungefähre Positionsbestimmung durch ein einzelnes erstes Markierelement. Mit der zweiten Frequenz wird beispielsweise die Position ermittelt, falls Steuerungsfunktionen auf der mobilen Einheit bereitgestellt werden sollen. In diesem Fall ist eine genauere Positionsermittlung erforderlich, beispielsweise aufgrund einer Vielzahl angeordneter zweiter Markierelemente.

In einer Ausführungsvariante ist das Positionsmodul eingerichtet ist die Position der mobilen Einheit (1) zu ermitteln aufgrund von eines GPS-Moduls (GPS: Global Positioning System), einer GSM Ortungseinrichtung (GSM: Global System for Mobile Communication), einer UMTS Ortungseinrichtung (UMTS: Universal Telecommunications System) und/oder einer WLAN (WLAN: Wireless Local Area Network) basierten Ortungseinrichtung. Viele mobile Einheiten wie beispielsweise Mobilfunkgeräte, Tabletcomputer oder Laptopcomputer haben die betreffenden Einrichtungen standardmässig integriert, welche für die Positionsbestimmung herangezogen werden können. Die Einrichtungen zur Ermittlung der Position der mobilen Einheit können beispielsweise kombiniert zur Anwendung kommen. So kann die Position beispielsweise zunächst über Markierelemente ermittelt werden. In einem weiteren Schritt kann die Position beispielsweise über eine GSM Ortungseinrichtung ermittelt werden. Die ermittelten Positionen können verglichen werden und falls diese ähnliche Werte aufweisen, kann z.B. ein Mittelwert gebildet werden. Falls die Werte sehr unterschiedlich sind, kann eine weitere Einrichtung herangezogen werden zur Positionsbestimmung, beispielsweise eine WLAN Ortungseinrichtung.

In einer Ausführungsform sind Definitionsdaten für nicht überlappende Sektoren der Produktionsanlage, Positionsdaten von Markierelementen, Standorte von Einrichtungen der Produktionsanlage und/oder Funktionen von Einrichtungen der Produktionsanlage ganz oder teilweise auf der mobilen Einheit abgespeichert: Durch das Abspeichern der Daten kann die mobile Einheit vollkommen autonom sein. Viele mobile Einheiten verfügen über genügend Speicher, um auch sehr komplexe Datenmengen effizient abzuspeichern und darauf zuzugreifen. In einer Ausführungsform sind die Daten nur teilweise auf der mobilen Einheit abgespeichert und werden z.B. bei einem Positions- oder Sektorwechsel laufend von einer zentralen Einrichtung nachgeladen.

In einer Ausführungsform umfassen bereitgestellte, produktionsanlagespezifische Funktionen der mobilen Einheit eine Darstellung einer auf einem Touchscreen bedienbaren Benutzerschnittstelle zur menugeführten Steuerung von Einrichtungen der Produktionsanlage, eine Anzeige von Zustandsdaten von Einrichtungen der Produktionsanlage, eine Anzeige von Serviceanleitungen von Einrichtungen der Produktionsanlage, eine Anzeige von Reparaturanleitungen von Einrichtungen der Produktionsanlage und/oder eine Anzeige von Wegleitungsinformationen zum Auffinden von Einrichtungen der Produktionsanlage. Die Darstellung auf einem Touchscreen ermöglicht dem Benutzer das intuitive und damit wenig fehleranfällige Auslösen von Funktionen von Einrichtungen der Produktionsanlage. Die Anzeige von Zustandsdaten von Einrichtungen der Produktionsanlage informiert den Benutzer über wichtige Zustandsdaten und ermöglicht damit dem Benutzer, Funktionen auszulösen, welche dem aktuellen Zustand angepasst sind. Die Anzeige von Serviceanleitungen und/oder Reparaturanleitungen ermöglicht die exakte Information des Benutzers über durchzuführende Service- oder Reparaturschritte, wobei die Qualität verbessert und Fehler verkleinert werden. Die Anzeige von Wegleitungsinformationen ermöglicht es, den Benutzer der mobilen Einheit so rasch wie möglich an ein Ziel zu führen, beispielsweise für Reparatur- oder Serviceaufgaben.

In einer Ausführungsform umfassen bereitgestellte, die produktionsanlagespezifische eine bildliche und/oder animierte Darstellung von Handlungsabläufen, welche von einem Benutzer an der Produktionsanlage durchzuführen sind Die Unterstützung des Benutzers kann damit weiter verbessert und die Geschwindigkeit sowie Qualität der durchgeführten Arbeiten weiter verbessert werden.

In einer Ausführungsvariante beziehen sich die bereitgestellten Funktionen auf eine Logistikanlage, eine Versandhausanlage, ein Produktionsfliessband, eine Produktverarbeitungsanlage für vereinzelbare Produkte, insbesondere flächige, flexible Produkte, eine Druckproduktverarbeitungsanlage und/oder einen Versandraum für Druckprodukte. Produktverarbeitungsanlagen für vereinzelbare Produkte umfassen eine grosse Anzahl verschiedener Einrichtungen, welche insbesondere bedarfsgerecht gewartet werden müssen, wozu eine mobile Einheit mit bedarfsgerecht bereitgestellten Funktionen besonders geeignet ist. Druckproduktverarbeitungsanlagen sind sehr komplex und insbesondere weitläufig, wobei beispielsweise für die Wartung eine mobile Einheit mit bedarfsgerecht bereitgestellten Funktionen ganz besonders geeignet ist. Eine Logistikanlage kann beispielsweise einen Flughafen, ein Lagerhaus, ein Warenlager, etc. betreffen. Eine Versandhausanlage kann beispielsweise für das Sortieren von Paketen, für das Abpacken von Artikel in Pakete, etc. eingerichtet sein. Ein Produktionsfliessband kann beispielsweise zur Herstellung von Automobilen, Lebensmittel, Schokolade, etc. eingerichtet sein.

In einer Ausführungsform ist eine drahtlose Kommunikationsschnittstelle vorgesehen zum Aufbau einer Kommunikationsverbindung mit einer Steuereinheit der Produktionsanlage Über die drahtlose Kommunikationsschnittstelle kann die mobile Einheit bereitgestellte Funktionen für Anlagen der Produktionsanlage direkt ausführen. Die Funktionen betreffen in einer Ausführungsform mehrere Einrichtungen der Produktionsanlage gleichzeitig. In einer Ausführungsform wird beispielsweise eine Authentifizierung des Benutzers, eine Berechtigung des Benutzers oder eine andere Sicherheitsüberprüfung durchgeführt.

In einer Ausführungsform ist eine Schreib-/Leseeinrichtung vorgesehen zum Schreiben und/oder Lesen von Daten in verteilt angeordneten Markierelementen. Die verteilt angeordneten Markierelemente können als Datenspeicher genutzt werden, beispielsweise um ein Logbuch über Ereignisse zu führen, wie z.B. dass eine bestimmte mobile Einheit zu einem bestimmten Zeitpunkt sich in einem bestimmten Sektor oder bei einem bestimmten Markierelement befunden hat. Dadurch kann beispielsweise nachvollzogen werden, ob z.B. Reparatur- oder Servicearbeiten zu einem vorgeschriebenen Zeitpunkt durchgeführt wurden. In einer Ausführungsform werden bei einer Erweiterung von Einrichtungen der Produktionsanlage die Markierelemente mit entsprechenden Daten beschrieben, um z.B. die neuen Einrichtungsteile zu berücksichtigen.

Neben einer mobilen Einheit, welche produktionsanlagespezifische Funktionen bereitstellt, bezieht sich die Erfindung auf ein Verfahren, um auf einer mobilen Einheit produktionsanlagespezifische Funktionen bereitzustellen. Das Verfahren umfasst: Ermitteln einer räumlichen Position der mobilen Einheit, Ermitteln eines Sektors aufgrund der ermittelten Position der mobilen Einheit aus mehreren nicht überlappenden Sektoren der Produktionsanlage, und Bereitstellen von produktionsanlagespezifischen Funktionen der mobilen Einheit in Abhängigkeit des ermittelten Sektors.

In einer Ausführungsvariante wird die Position der mobilen Einheit aufgrund von mittels elektromagnetischer Wellen aktivierbaren und detektierbaren, verteilten Markierelementen wie insbesondere RFID-Tags oder Tags einer NFC Technologie ermittelt.

In einer Ausführungsvariante wird eine Sendeleistung eines Senders zur Ausstrahlung einer elektromagnetischen Welle verändert, um die Position der mobilen Einheit zu ermitteln.

In einer Ausführungsvariante wird eine Frequenz eines Senders zur Ausstrahlung einer elektromagnetischen Welle verändert, um die Position der mobilen Einheit zu ermitteln.

In einer Ausführungsvariante wird die Position der mobilen Einheit aufgrund von einer oder mehreren der folgenden Einrichtungen ermittelt: ein GPS-Modul, eine GSM Ortungseinrichtung, eine UMTS Ortungseinrichtung, eine WLAN basierte Ortungseinrichtung.

In einer Ausführungsvariante werden eine oder mehrere der folgenden Daten ganz oder teilweise auf der mobilen Einheit abgespeichert: Definitionsdaten für nicht überlappende Sektoren der Produktionsanlage, Positionsdaten von Markierelementen, Standorte von Einrichtungen der Produktionsanlage, Funktionen von Einrichtungen der Produktionsanlage.

In einer Ausführungsvariante werden produktionsanlagespezifische Funktionen auf der mobilen Einheit bereitgestellt welche eine oder mehrere der folgenden Funktionen umfassen: Darstellung einer auf einem Touchscreen bedienbaren Benutzerschnittstelle zur menugeführten Steuerung von Einrichtungen der Produktionsanlage, Anzeige von Zustandsdaten von Einrichtungen der Produktionsanlage, Anzeige von Serviceanleitungen von Einrichtungen der Produktionsanlage, Anzeige von Reparaturanleitungen von Einrichtungen der Produktionsanlage, Anzeige von Wegleitungsinformationen zum Auffinden von Einrichtungen der Produktionsanlage.

In einer Ausführungsvariante werden produktionsanlagespezifische Funktionen bereitgestellt, welche eine bildliche und/oder animierte Darstellung von Handlungsabläufen umfassen, die von einem Benutzer an der Produktionsanlage durchzuführen sind.

In einer Ausführungsvariante werden Funktionen bereitgestellt, welche sich auf eine oder mehrere der folgenden Produktionsanlagen beziehen: Logistikanlage, Versandhausanlage, Produktionsfliessband, Produktverarbeitungsanlage für vereinzelbare Produkte, insbesondere flächige, flexible Produkte, Druckproduktverarbeitungsanlage, Versandraum für Druckprodukte.

In einer Ausführungsvariante wird über eine drahtlose Kommunikationsschnittstelle eine Kommunikationsverbindung mit einer Steuereinheit der Produktionsanlage aufgebaut.

In einer Ausführungsvariante werden mit einer Schreib-/Leseeinrichtung Daten in verteilt angeordneten Markierelementen gelesen und/oder geschrieben.

Neben einer mobilen Einheit, welche produktionsanlagespezifische Funktionen bereitstellt, und einem Verfahren, um auf einer mobile Einheit produktionsanlagespezifische Funktionen bereitzustellen, bezieht sich die Erfindung ferner auf ein Computerprogrammprodukt, umfassend ein greifbares computerlesbares Speichermedium mit gespeichertem Computercode, welcher eingerichtet ist, einen oder mehrere Prozessoren einer mobilen Einheit zu steuern zur Bereitstellung von produktionsanlagespezifische Funktionen auf der mobilen Einheit, wobei der Computercode die mobile Einheit so steuert, dass: die räumliche Position der mobilen Einheit ermittelt wird, ein Sektor ermittelt wird aufgrund der ermittelten Position der mobilen Einheit aus mehreren nicht überlappenden Sektoren der Produktionsanlage, und produktionsanlagespezfifische Funktionen der mobilen Einheit bereitgestellt werden in Abhängigkeit des ermittelten Sektors.

In einer Ausführungsform wird die Grösse der Sektoren in Abhängigkeit von der Genauigkeit bei der Positionsbestimmung gewählt. Falls die Position z.B. aufgrund von einer Vielzahl von Markierelementen sehr präzise feststellbar ist, können beispielsweise kleinere Sektoren definiert werden, in welchen bestimmte Funktionen auf der mobilen Einheit zur Verfügung stehen.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch eine mobile Einheit, Sektoren und Markierelemente;
- Fig. 2a: schematisch eine mobile Einheit und sich überlappende Wirkungsbereiche von Markierungselementen;
- Fig. 2b: schematisch eine mobile Einheit und Wirkungsbereiche bei unterschiedlichen Sendeleistungen;
- Fig. 3: schematisch als Produktionsanlage eine Produktverarbeitungsanlage mit mehreren angeordneten Markierelementen und einer mobilen Einheit;
- Fig. 4: schematisch eine Anzeige einer mobilen Einheit mit einer darauf angezeigten perspektivischen Darstellung einer dreidimensional dargestellten Produktverarbeitungsanlage;

- Fig. 5: schematisch eine Anzeige einer mobilen Einheit mit einer darauf angezeigten perspektivischen Darstellung einer Einrichtung einer Produktverarbeitungsanlage;
- Fig. 6: schematisch eine Anzeige einer mobilen Einheit mit einer darauf angezeigten perspektivischen Darstellung eines Bestandteils einer Einrichtung einer Produktverarbeitungsanlage; und
- Fig. 7: ein Flussdiagram mit einer Sequenz möglicher Schritte für die Bereitstellung von produktionsanlagespezifische Funktionen einer mobilen Einheit.

### WEG(E) ZUR AUSFÜHRUNG DER ERFINDUNG

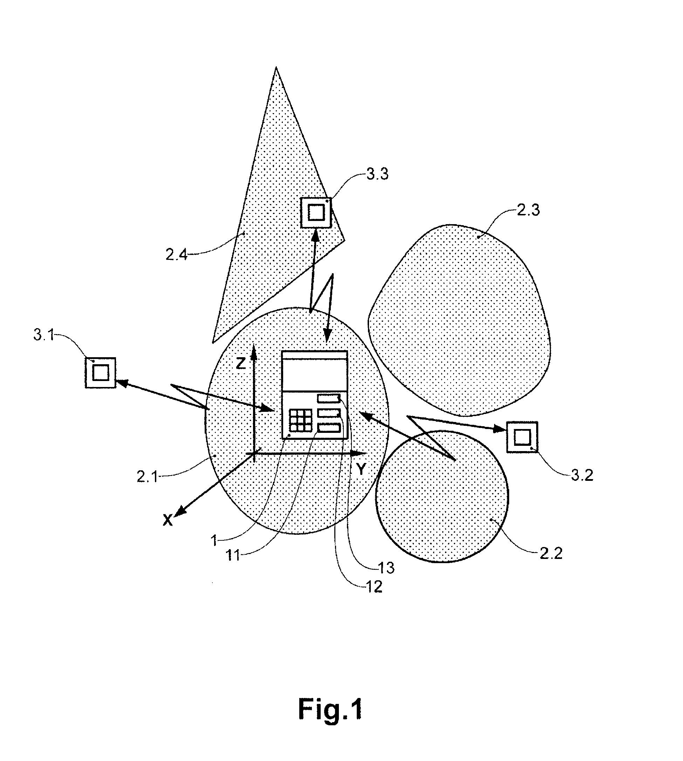

Figur 1 zeigt schematisch eine mobile Einheit 1. Die mobile Einheit 1 umfasst beispielsweise einen mobilen Computer, einen Tablet Computer, ein Mobilfunkgerät oder eine andere computerisierte und/oder elektronische mobile Einheit.

Die mobile Einheit 1 umfasst ein Positionsmodul 11 zur Ermittlung der Position der mobilen Einheit 1. In einer Ausführungsvariante ist das Positionsmodul 11 eingerichtet zur Ermittlung der Position der mobilen Einheit 1 aufgrund von mittels elektromagnetischen Wellen aktivierbaren und detektierbaren, an unterschiedlichen Positionen angebrachten Markierelementen 3.1, 3.2, 3.3 wie insbesondere RFID-Tags (RFID: Radio Frequency Identification) oder Tags einer NFC Technologie (NFC: Near Field Communication). In einer Ausführungsvariante umfasst das Positionsmodul 11 ein GPS Modul (GPS: Global Positioning System) zur Ermittlung der Position der mobilen Einheit 1 aufgrund eines globalen Positionssystems. In einer Ausführungsvariante umfasst das Positionsmodul 11 eine mobilfunkbasierte Ortung wie z.B eine GSM Ortung oder eine UMTS Ortung (GSM: Global System for Mobile Communications; UMTS: Universal Telecommunications System). In einer Ausführungsvariante umfasst das Positionsmodul 11 eine WLAN basierte Ortungseinrichtung (WLAN: Wireless Local Area Network). In einer weiteren Ausführungsvariante umfasst das Positionsmodul 11 eine andere Einrichtung, um die Position der mobilen Einheit 1 zu ermitteln.

Die mobile Einheit 1 umfasst ein Sektormodul 12 um aufgrund der ermittelten Position der mobilen Einheit 1 einen Sektor 2.1, 2.2, 2.3, 2.4 zu ermitteln aus einem oder mehreren nicht überlappenden Sektoren 2.1, 2.2, 2.3, 2.4 einer Produktverarbeitungsanlage 5. Die Sektoren 2.1, 2.2, 2.3, 2.4 können beispielsweise aufgrund von Sektordaten definiert sein, z.B. in der Form von Datenvektoren oder Datenmatrizen, welche die Geometrie der nicht überlappenden Sektoren 2.1, 2.2, 2.3, 2.4 definieren. Bei der Ermittlung eines Sektors 2.1, 2.2, 2.3, 2.4 wird beispielsweise eine Identifikation wie z.B. ein Index ermittelt, welche den Sektor 2.1, 2.2, 2.3, 2.4 eindeutig identifiziert. Die nicht überlappenden Sektoren 2.1, 2.2, 2.3, 2.4 der Produktverarbeitungsanlage 5 können irgendeine zweidimensionale oder dreidimensionale Form aufweisen, insbesondere eine kreisförmige Fläche, eine ovale Fläche, eine dreieckförmige Fläche, einen sphärischen Körper, einen Quader oder einen Sektor mit einer anderen Kontur.

Die nicht überlappenden Sektoren 2.1, 2.2, 2.3, 2.4 weisen eine beliebige Grösse und eine beliebige Geometrie auf. Die nicht überlappenden Sektoren 2.1, 2.2, 2.3, 2.4 beziehen sich beispielsweise auf Gebäudebereiche, auf Maschinenbereiche, auf Stockwerkbereiche, auf Wartungsbereiche, auf Beobachtungsbereiche, etc.

Die mobile Einheit 1 umfasst ein Bereitstellungsmodul 13 zur Bereitstellung von produktionsanlagespezifischen Funktionen der mobilen Einheit in Abhängigkeit des ermittelten Sektors 2.1, 2.2, 2.3, 2.4. Die produktionsanlagespezifischen Funktionen können Steuerungsfunktionen, Anzeigefunktionen, Überwachungsfunktionen, Einstellfunktionen, Wartungsfunktionen, Wechselfunktionen und/oder irgendwelche andere Funktionen betreffen. Steuerungsfunktionen können beispielsweise das Einschalten oder das Ausschalten von Einrichtungen der Produktverarbeitungsanlage 5 betreffen. Anzeigefunktionen können beispielsweise den Betriebszustand wie einen Füllstand einer Einrichtung der Produktverarbeitungsanlage 5 betreffen. Überwachungsfunktionen können beispielsweise die Überwachung von Einrichtungen der Produktionsanlage 5 mit einer Videokamera betreffen.

In Figur 1 befindet sich die mobile Einheit 1 in dem mit dem Bezugszeichen 2.1 versehenen Sektor der Produktverarbeitungsanlage 5. In einer Ausführungsvariante wird die Position der mobilen Einheit 1 mit einer Genauigkeit erfasst, welche der Genauigkeit der Definition der nicht überlappenden Sektoren 2.1, 2.2, 2.3, 2.4 entspricht. Die Genauigkeit kann beispielsweise 1 m, 10cm, 1 cm oder einer anderen Genauigkeit entsprechen. In einer Ausführungsvariante wird die Position der mobilen Einheit 1 mit einer Genauigkeit erfasst, welche grösser ist als die Genauigkeit der Definition der nicht überlappenden Sektoren 2.1, 2.2, 2.3, 2.4, d.h. es kann angegeben werden, wo sich die mobile Einheit 1 innerhalb eines Sektors 2.1, 2.2, 2.3, 2.4 befindet. In einer Ausführungsvariante wird die Position der mobilen Einheit 1 mit einer Genauigkeit erfasst, welche kleiner ist als die Genauigkeit der Definition der nicht überlappenden Sektoren 2.1, 2.2, 2.3, 2.4, d.h. es kann nur angegeben werden, ob sich die Position der mobilen Einheit 1 und ein Sektor 2.1, 2.2, 2.3, 2.4 überschneiden.

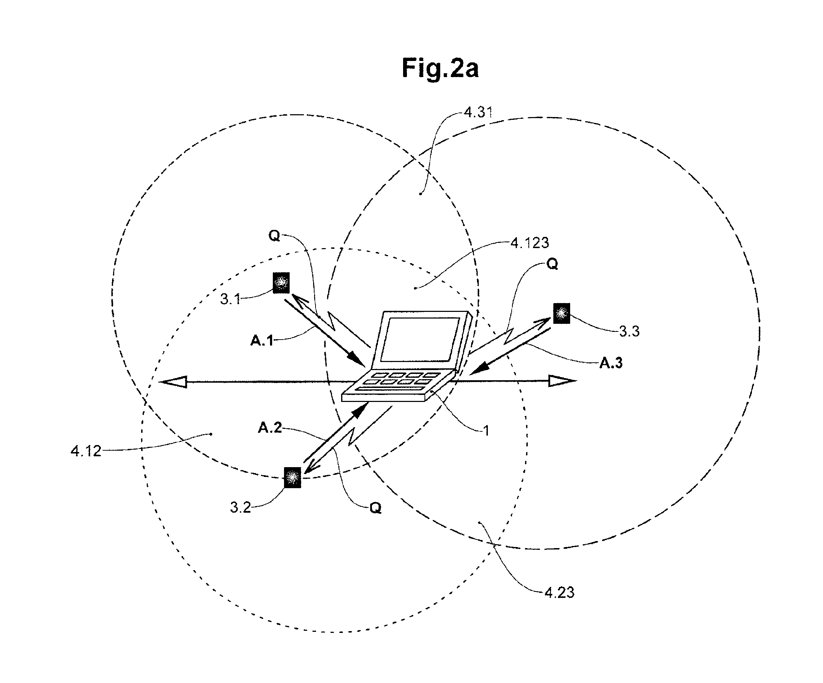

Figur 2a zeigt eine mobile Einheit 1 sowie drei Markierelemente 3.1, 3.2, 3.3, welche von der mobilen Einheit 1 aktivierbar und detektierbar sind. Die Markierelemente 3.1, 3.2, 3.3 betreffen beispielsweise RFID-Tags oder Tags einer NFC Technologie, wobei ein Positionsmodul 11 der mobilen Einheit 1 ein entsprechendes Lesegerät wie beispielsweise ein RFID-Lesegerät oder ein Lesegerät einer NFC Technologie aufweist. Um die Markierelemente 3.1, 3.2, 3.3 zu aktivieren und zu detektieren, wird vom Positionsmodul 11 der mobilen Einheit 1 eine elektromagnetische Welle mit einem Abfragesignal Q ausgesendet. Falls sich ein oder mehrere Markierelemente 3.1, 3.2, 3.3 im Wirkungsbereich des ausgesendeten Abfragesignals Q befindet, wird das eine oder mehrere Markierelement 3.1, 3.2, 3.3 durch die im Abfragesignal Q enthaltenen elektromagnetischen Energie aktiviert. Aufgrund der Aktivierung sendet das eine oder mehrere Markierelement 3.1, 3.2, 3.3 eine elektromagnetische Welle mit einem Antwortsignal A.1, A.2, A.3 aus, welches vom Positionsmodul 11, also insbesondere vom RFID-Lesegerät oder einem Lesegerät einer NFC Technologie, empfangen wird. Das Antwortsignal A.1, A.2, A.3 umfasst in einer Ausführungsvariante Identifikationsdaten des Markierelements 3.1, 3.2, 3.3, wobei das Positionsmodul 11 beispielsweise eingerichtet ist, die Position des Markierelements 3.1, 3.2, 3.3 aus einer Datenbankabfrage zu ermitteln. In einer Ausführungsvariante umfasst das Antwortsignal A.1, A.2, A.3 Positionsdaten, wobei das Positionsmodul eingerichtet ist, die Position des betreffenden einen oder mehreren Markierelements 3.1, 3.2, 3.3 aufgrund der übermittelten Positionsdaten zu ermitteln.

Wie in Figur 2a dargestellt, weisen das eine oder die mehreren Markierelemente 3.1, 3.2, 3.3 einen Wirkungsbereich auf, innerhalb welchem das betreffende Markierelement 3.1, 3.2, 3.3 von der mobilen Einheit 1 aktivierbar und detektierbar ist. In Figur 2a sind kreisförmige Wirkungsbereiche mit einer gestrichelten Linie dargestellt. Ein kreisförmiger resp. kugelförmiger Wirkungsbereich ergibt sich beispielsweise bei einer Anordnung der Markierelemente 3.1, 3.2, 3.3 und der mobilen Einheit 1 im freien Raum. In einer Umgebung einer Produktverarbeitungsanlage können in einer ersten Annäherung kreisförmige Wirkungsbereiche der Markierelemente 3.1, 3.2, 3.3 angenommen werden. In einer genaueren Beschreibung sind die Wirkungsbereiche der Markierelemente 3.1, 3.2, 3.3 deformiert, beispielsweise aufgrund der abschirmenden Wirkung von Komponenten der Produktverarbeitungsanlage oder von Gebäudeteilen wie Wänden oder Türen. Die Grösse der Wirkungsbereiche der Markierelemente 3.1, 3.2, 3.3 hängen insbesondere von der Sendeleistung des Positionsmoduls 11 der mobilen Einheit 1 und vom Wirkungsgrad der Markierelemente 3.1, 3.2, 3.3 ab.

Wie in Figur 2a ersichtlich, überlappen sich die Wirkungsbereiche von Markierelementen 3.1, 3.2, 3.3, falls der gegenseitige Abstand, die Sendeleistung des Positionsmoduls 11 der mobilen Einheit 1 und der Wirkungsgrad der Markierelemente 3.1, 3.2, 3.3 dies zulassen. In Figur 2a ist schematisch der Fall gezeigt, bei welchem sich drei kreisförmige Wirkungsbereiche von drei Markierelementen 3.1, 3.2, 3.3 überlappen. Wie aus Figur 2a ersichtlich, ergibt sich ein zentraler Überlappungsbereich 4.123 für die Überlappung aller drei Wirkungsbereiche. Ausserhalb des zentralen Überlappungsbereichs 4.123 ergeben sich ein erster Überlappungsbereich 4.12 für die Überlappung des Wirkungsbereichs eines ersten und eines zweiten Markierelements 3.1, 3.2, ein zweiter Überlappungsbereich 4.23 für die Überlappung des Wirkungsbereichs des zweiten und eines dritten Markierelements 3.2, 3.3 und ein dritter Überlappungsbereich 4.31 für die Überlappung des Wirkungsbereichs des dritten und des ersten Markierelements 3.3, 3.1.

In Figur 2a befindet sich die mobile Einheit 1 im zentralen Überlappungsbereich 4.123. In diesem Fall sind alle drei Markierelemente 3.1, 3.2, 3.3 aktivierbar und detektierbar. Falls nur das erste und das zweite Markierelement 3.1, 3.2 aktivierbar und detektierbar sind, befindet sich die mobile Einheit 1 im ersten Überlappungsbereich 4.12. Falls nur das zweite und dritte Markierelement 3.2, 3.3 aktivierbar und detektierbar sind, befindet sich die mobile Einheit 1 im zweiten Überlappungsbereich 4.23. Falls nur das dritte und erste Markierelement 3.3, 3.1 aktivierbar und detektierbar sind, befindet sich die mobile Einheit 1 im dritten Überlappungsbereich 4.31. Falls nur das erste Markierelement 3.1 und keine anderen Markierelemente 3.2, 3.3 aktivierbar und detektierbar ist, befindet sich die mobile Einheit 1 ausserhalb der Überlappungsbereiche aber innerhalb dem Wirkungsbereich des ersten Markierelements 3.1, etc.

In Abhängigkeit davon, welche der Markierelemente 3.1, 3.2, 3.3 von der mobilen Einheit 1 aktivierbar und detektierbar sind, ist die Position der mobilen Einheit 1 ermittelbar. Die Genauigkeit der ermittelten Position ergibt sich aus der Grösse der kreisförmigen Wirkungsbereiche der Markierelemente 3.1, 3.2, 3.3 und der Überlappungen der Wirkungsbereiche. Durch die Anordnung von zusätzlichen Markierelementen, insbesondere mit überlappenden Wirkungsbereichen zu schon bestehenden Wirkungsbereichen, lässt sich die Genauigkeit bei der Ermittlung der Position der mobilen Einheit 1 verbessern.

In einer Ausführungsvariante umfasst das Positionsmodul 11 eine Leistungsregelung, um die Sendeleistung zur Aktivierung und Detektion der Markierelemente 3.1, 3.2, 3.3 zu regeln. In einem ersten Schritt wird beispielsweise die Leistung so weit reduziert, bis nur noch ein einziges Markierelement 3.1, 3.2, 3.3 aktivierbar und detektierbar ist. In einem zweiten Schritt wird die Leistung so lange erhöht bis ein weiteres Markierelement 3.1, 3.2, 3.3 aktivierbar und detektierbar ist. In einem dritten Schritt wird die Leistung so lange erhöht bis ein weiteres Markierelement 3.1, 3.2, 3.3 aktivierbar und detektierbar ist. Wie erwähnt ist die Position der Markierelemente 3.1, 3.2, 3.3 bekannt, beispielsweise aufgrund einer Datenbank, in welcher Identifikationen der Markierelemente 3.1, 3.2, 3.3 den Positionen zugeordnet abgespeichert sind oder auf in den Markierelementen 3.1, 3.2, 3.3 abgespeicherten Positionsdaten. Unter der Annahme von kreisförmigen Wirkungsbereichen der Markierelemente 3.1, 3.2, 3.3, lässt sich somit beispielsweise aus den Schnittpunkten der kreisförmigen Wirkungsbereiche die Position der mobilen Einheit 1 zusätzlich überprüfen.

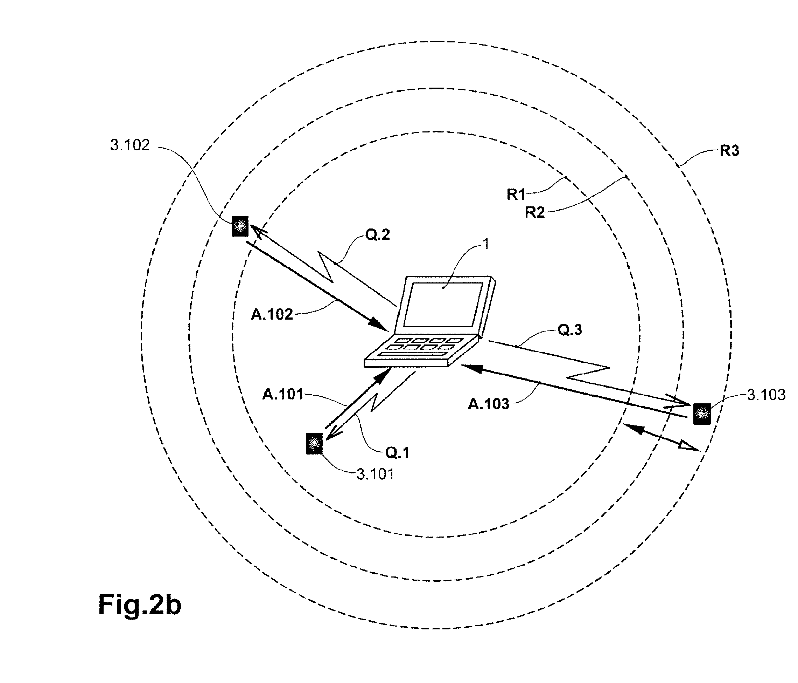

Figur 2b zeigt schematisch eine mobile Einheit 1 sowie drei davon in unterschiedlichem Abstand angeordnete Markierelemente 3.101, 3.102, 3.102. Die mobile Einheit befindet sich im Zentrum von den drei in Figur 2b dargestellten konzentrischen Kreisen R1, R2, R3. Das erste Markierelement 3.101 befindet sich innerhalb aller Kreise R1, R2, R3. Das zweite Markierelement 3.102 befindet sich innerhalb der Kreise mit den Bezugszeichen R2 und R3. Das dritte Markierelement befindet sich innerhalb des Kreises mit dem Bezugszeichen R3. Durch die Kreise wird die Reichweite der mobilen Einheit 1 angegeben für drei verschiedene Sendeleistungen. Das Abfragesignal Q.1 wird mit der kleinsten Sendeleistung abgegeben und erreicht nur das erste Markierelement 3.101, welches das Antwortsignal A.101 zurücksendet. Das Abfragesignal Q.2 wird mit einer mittleren Sendeleistung abgegeben und erreicht auch das zweite Markierelement 3.102, welches das Antwortsignal A.102 zurücksendet. Das Abfragesignal Q.3 wird mit der grössten Sendeleistung abgegeben und erreicht zudem das dritte Markierelement 3.103, welches das Antwortsignal A. 103 zurücksendet. Beim Abfragesignal Q.2 sendet zwar das erste Markierelement das Antwortsignal A.101 zurück, welches jedoch vom Antwortsignal A. 102 des zweiten Markierelements unterschieden werden kann. Beim Abfragesignal Q.3 senden das erste und das zweite Markierelement 3.101, 3.102 je ihre Antwortsignale A.1 01, A.102 zurück, welche jedoch vom Antwortsignal A. 103 des dritten Markierelements unterschieden werden können. Durch unterschiedliche Sendeleistungen kann die Bestimmung der Position der mobilen Einheit 1 verbessert werden.

In einer Ausführungsvariante umfasst das Positionsmodul 11 eine Frequenzregelung, um eine Frequenz eines Senders zur Ausstrahlung einer elektromagnetischen Welle zu verändern. Der Sender ist beispielsweise in Wirkverbindung mit dem Positionsmodul 11 oder ist von diesem umfasst. Markierelemente eines bestimmten Typs sind eingerichtet, um durch eine bestimmte Frequenz aktiviert und detektiert zu werden. Durch die Frequenzregelung lassen sich unterschiedliche Typen von Markierelementen aktivieren. Dadurch ergeben sich weitere Anwendungsgebiete zur Bereitstellung von Funktionen einer mobilen Einheit.

Um die Genauigkeit bei der Ermittlung der Position der mobilen Einheit 1 aufgrund von Markierelementen zu verbessern, können andere dem Fachmann bekannte Einrichtungen oder Verfahren eingesetzt oder miteinander kombiniert werden.

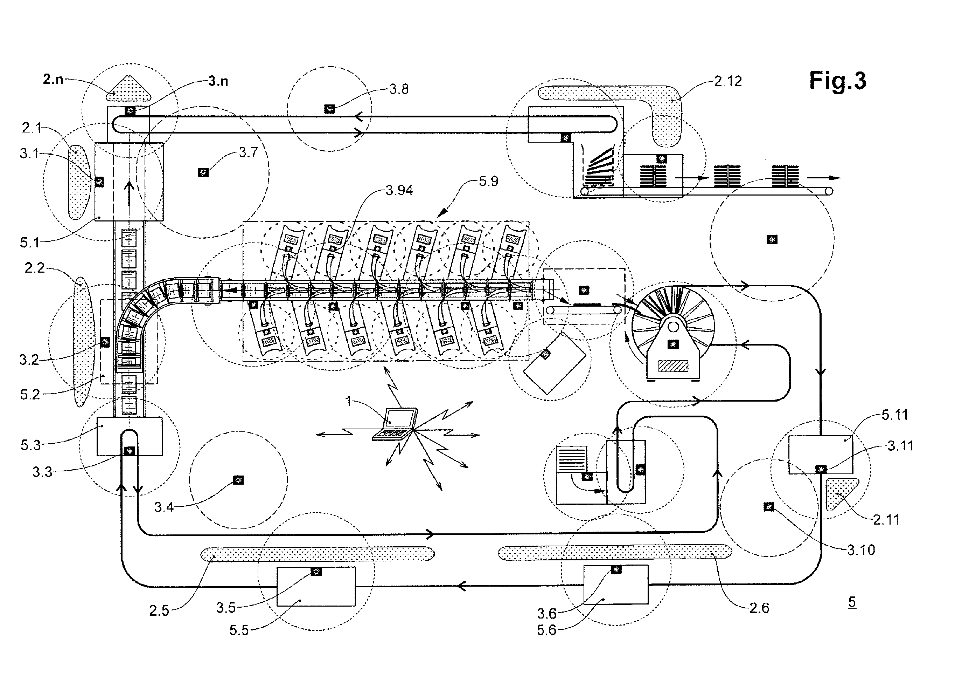

Figur 3 zeigt eine Produktverarbeitungsanlage 5 mit einer Vielzahl angeordneter Markierelemente 3.1, 3.2, 3.3, 3.4, ..., 3.n. Die Wirkungsbereiche der Markierelemente 3.1, 3.2, 3.3, 3.4, ..., 3.n sind in Figur 3 schematisch als kreisförmige Wirkungsbereiche eingezeichnet. Wie erwähnt hängt insbesondere der Durchmesser der Wirkungsbereiche von der Sendeleistung des Senders eines entsprechenden Lesegeräts und dem Wirkungsgrad der Markierelemente 3.1, 3.2, 3.3, 3.4, ..., 3.n ab.

Die Produktverarbeitungsanlage 5 umfasst mehrere Einrichtungen wie beispielsweise eine Zusammentraganlage 5.9, welche mehrere Zuförderer umfasst, die Produkte einem Förderer zuführen, um die Produkte zu Produktkollektionen zusammenzutragen. Die Produktverarbeitungsanlage 5 umfasst weitere Einrichtungen, wie beispielsweise eine Abgabe- und Zusammenführeinrichtung 5.2, eine Abgabeeinrichtung 5.3, eine Foliereinrichtung 5.1, eine Adressiereinrichtung 5.5, eine Schneideinrichtung 5.6, etc. Die Produktverarbeitungsanlage 5 umfasst beispielsweise weitere Einrichtungen wie Einsteckvorrichtungen, Heftvorrichtungen, Bedienpulte, Aufnahmeeinrichtungen, Abgabeeinrichtungen, Stapeleinrichtung, Bindeeinrichtungen, Abtransporteinrichtungen, etc.

Wie in Figur 3 schematisch dargestellt, sind die Markierelemente 3.1, 3.2, 3.3, 3.4, ..., 3.n beispielsweise an einer oder mehreren Einrichtungen der Produktverarbeitungsanlage 5 angebracht. Die Markierelemente 3.1, 3.2, 3.3, 3.4, ..., 3.n sind ferner an irgendwelchen geeigneten Stellen angebracht. Beispielsweise ist das Markierelement mit Bezugszeichen 3.4 zwischen der Abgabeeinrichtung 5.3 und der Adressiereinrichtung 5.5 angebracht, das Markierelement mit Bezugszeichen 3.7 zwischen der Foliereinrichtung 5.1 und der Zusammentraganlage 3.9, etc.

Wie in Figur 3 schematisch dargestellt, sind im Bereich der Produktverarbeitungsanlage 5 nicht überlappende Sektoren 2.1, 2.2, 2.3, 2.4, ..., 2.n definiert. Die Definition der Sektoren 2.1, 2.2, 2.3, 2.4, ..., 2.n ist in Sektordaten abgespeichert, beispielsweise auf der mobilen Einheit 1 oder auf einem Netzwerkspeicher, welcher extern zur mobilen Einheit 1 angeordnet ist. Die Definition der Sektordaten 2.1, 2.2, 2.3, ..., 2.n umfasst beispielsweise Daten einer Kurve oder einer Hüllfläche, z.B. in der Form von Interpolationspunkten, welche die Kurve oder die Hüllfläche definieren. Die Sektoren 2.1, 2.2, 2.3, 2.4, ..., 2.n sind beispielsweise im Bedienbereich von Einrichtungen der Produktverarbeitungsanlage 5 definiert. Die Sektoren 2.1, 2.2, 2.3, 2.4, ..., 2.n sind in einer Variante in Zwischenbereichen oder begehbaren Bereichen der Produktverarbeitungsanlage 5 definiert.

In Figur 3 ist schematisch eine mobile Einheit 1 dargestellt. Die mobile Einheit 1 umfasst wie beschrieben ein Positionsmodul 11, ein Sektormodul 12 und ein Funktionsmodul 13. Die mobile Einheit 1 ist insbesondere eingerichtet, um vom Bedienpersonal der Produktverarbeitungsanlage 5 während der Arbeit mitgetragen zu werden, um an den verschiedenen Einrichtungen der Produktverarbeitungsanlage 5 Überwachungsaufgaben, Serviceaufgaben, Reparaturaufgaben, Steuerungsaufgaben, etc. durchzuführen. Diese Aufgaben umfassen beispielsweise das Wechseln von Foliermaterial bei der Foliereinrichtung 5.1, das Beheben von Störungen bei der Abgabeeinrichtung 5.3, das Nachfüllen von Verbrauchsmaterial wie z.B. Toner, Kleber, Tinte, etc. bei der Adressiereinrichtung 5.5, das Überprüfen der Schneidqualität bei der Schneideinrichtung 5.6, etc.

Die mobile Einheit 1 ist aufgrund des Positionsmoduls 11 und des Sektormoduls 12 eingerichtet, um fortlaufend zu ermitteln, in welchem Sektor 2.1, 2.2, 2.3, ..., 2.n sich die mobile Einheit 1 befindet. Aufgrund des Bereitstellungsmoduls 12 der mobilen Einheit 1 werden je nach Sektor produktionsanlagespezifische Funktionen auf der mobilen Einheit bereitgestellt, um beispielsweise Überwachungsaufgaben, Steuerungsaufgaben, etc. durchführen zu können. Falls sich die mobile Einheit 1 in einem Sektor 2.1 bei der Foliereinrichtung 5.1 befindet, werden die entsprechenden Funktionen zum Überwachen, Steuern, etc. der Foliereinrichtung 5.1, also z.B. zum Anzeigen der verbleibenden Menge Foliermaterial, bereitgestellt. Falls sich die mobile Einheit 1 in einem Sektor 2.2 bei der Abgabeeinrichtung 5.2 befindet, werden die entsprechenden Funktionen zum Überwachen, Steuern, etc. der Abgabeeinrichtung 5.2, also z.B. zum Stoppen der Abgabeeinrichtung 5.2 um einen Stau zu beheben, bereitgestellt. In analoger Weise werden je nach Sektor 2.1, 2.2, 2.3, ..., 2.n in welchem sich die mobile Einheit 1 befindet entsprechende Funktionen zur Verfügung gestellt.

In einer Ausführungsvariante sind die Funktionen, welche von der mobilen Einheit 1 bereitgestellt werden können in einer Funktionsdatenbank den Sektoren 2.1, 2.2, 2.3, 2.4 zugeordnet abgespeichert. In einer Variante ist die Funktionsdatenbank teilweise oder ganz auf der mobilen Einheit 1 abgespeichert. In einer weiteren Variante ist die Funktionsdatenbank teilweise oder ganz auf einem Netzwerkcomputer abgespeichert, welcher extern zur mobilen Einheit 1 angeordnet ist.

In einer Ausführungsvariante umfasst die mobile Einheit 1 eine Kommunikationsschnittstelle zur Kommunikation mit einer Steuereinheit der Produktverarbeitungsanlage 5. Die Kommunikationsschnittstelle ist beispielsweise als WLAN Schnittstelle oder in einer anderen Weise ausgeführt. Beispielsweise über gesicherte Kommunikationsverbindungen kommuniziert die mobile Einheit 1 mit der Steuereinheit der Produktverarbeitungsanlage 5, um Steueraufgaben, Überwachungsaufgaben, Kontrollaufgaben, etc. durchzuführen.

In einer Ausführungsform umfasst die mobile Einheit 1 Daten, welche ein gesamtes Abbild der Produktverarbeitungsanlage 5 beschreiben, insbesondere betreffend die Standorte der einzelnen Einrichtungen 5.1, 5.2, 5.3, ..., betreffend die Standorte der Markierelemente 3.1, 3.2, 3.3, ..., betreffend die nicht überlappenden Sektoren 2.1, 2.2, 2.3, ..., betreffend Funktionen der einzelnen Einrichtungen 5.1, 5.2, 5.3, ..., etc.

In einer Ausführungsvariante werden bei Bedarf Daten betreffend die Produktverarbeitungsanlage 5 über eine Kommunikationsschnittstelle der mobilen Einheit 1 an die mobile Einheit 1 übermittelt, insbesondere betreffend die Standorte der einzelnen Einrichtungen 5.1, 5.2, 5.3, ..., betreffend die Standorte der Markierelemente 3.1, 3.2, 3.3, ..., betreffend die nicht überlappenden Sektoren 2.1, 2.2, 2.3, ..., betreffend Funktionen der einzelnen Einrichtungen 5.1, 5.2, 5.3, ..., etc.. Die Übermittlung dieser Daten kann beispielsweise bei einem Standortwechsel durch die mobile Einheit 1 angefordert werden. In einer Variante werden Daten betreffend die Produktionsanlage 5 in einem Push-Betrieb an die mobile Einheit 1 übermittelt.

In Figur 3 ist eine Foliereinrichtung 5.1 dargestellt, an welcher ein erstes Markierelement 3.1 angebracht ist. In einem Bedienungsbereich für die Foliereinrichtung 5.1 ist ein erster Sektor 2.1 definiert, in welchem die Bedienung der Foliereinrichtung 5.1 zulässig ist. Der erste Sektor 2.1 ist vom Wirkungsbereich des ersten Markierelements 3.1 vollständig umschlossen. Das Sektormodul 12 ist beispielsweise eingerichtet, den ersten Sektor 2.1 zu ermitteln, sobald sich die mobile Einheit 1 im Wirkungsbereich des ersten Markierelements 3.1 befindet. Aufgrund des ermittelten ersten Sektors 2.1, werden auf der mobilen Einheit 1 Funktionen bereitgestellt, welche für die Bedienung der Foliereinrichtung 5.1 erforderlich sind. Aufgrund der Geometrie des ersten Sektors 2.1 und des Wirkungsbereichs des ersten Markierelements 3.1 werden die Funktionen auch dann bereitgestellt, wenn sich die mobile Einheit 1 zwar im Wirkungsbereich des ersten Markierelements aber nicht im ersten Sektor 2.1 befindet. Falls dies nicht erwünscht ist, ist eine genauere Ermittlung der Position der mobilen Einheit 1 erforderlich, beispielweise durch Anbringen zusätzlicher Markierelemente.

In Figur 3 ist eine Abgabevorrichtung 5.2 dargestellt, an welcher ein zweites Markierelement 3.2 angebracht ist. In einem Bedienungsbereich für die Abgabevorrichtung 5.2 ist ein zweiter Sektor 2.2 definiert, in welchem die Bedienung der Abgabevorrichtung 5.2 zulässig ist. Der zweite Sektor 2.2 ist vom Wirkungsbereich des zweiten Markierelements nur teilweise umschlossen. Das Sektormodul 12 ist beispielsweise eingerichtet, den zweiten Sektor 2.2 zu ermitteln, sobald sich die mobile Einheit 1 im Wirkungsbereich des zweiten Markierelements befindet. Aufgrund des ermittelten zweiten Sektors 2.2 werden auf der mobilen Einheit 1 Funktionen bereitgestellt, welche für die Bedienung der Abgabevorrichtung 5.2 erforderlich sind. Aufgrund der Geometrie des zweiten Sektors und des Wirkungsbereichs des zweiten Markierelements 3.2 werden die Funktionen nicht bereitgestellt, wenn sich die mobile Einheit 1 zwar im zweiten Sektor 2.2 aber nicht im Wirkungsbereich des zweiten Markierelements befindet. Falls dies nicht erwünscht ist, ist eine genauere Ermittlung der Position der mobilen Einheit 1 erforderlich, beispielsweise durch Anbringen zusätzlicher Markierelemente.

In Figur 3 ist eine Heftvorrichtung 3.1 dargestellt, an welcher ein elftes Markierelement 3.11 angebracht ist. In einem Bedienungsbereich für die Heftvorrichtung 5.11 ist ein elfter Sektor 2.11 definiert, in welchem die Bedienung der Heftvorrichtung 5.11 zulässig ist. In Figur 3 befindet sich der elfte Sektor 2.11 auf der rechten Hälfte der Heftvorrichtung 5.11. Der elfte Sektor 2.11 ist vom Wirkungsbereich des elften Markierelements 3.11 vollständig umschlossen. Wie in Figur 3 dargestellt, ist in einem der linken Hälfte der Heftvorrichtung 3.11 zugeordneten Bereich ein zehntes Markierelement 3.10 angebracht. Das Sektormodul 12 ist beispielsweise eingerichtet, den elften Sektor 2.11 zu ermitteln, falls sich die mobile Einheit 1 im Wirkungsbereich des elften Markierelements 3.11 befindet, aber nicht im Wirkungsbereich des zehnten Markierelements 3.10.

In Figur 3 sind in entsprechender Weise ein fünfter Sektor 2.5, ein sechster Sektor 2.6, ein zwölfter Sektor 2.12 und ein n-ter Sektor 2.n dargestellt, wobei beispielsweise durch Anbringen zusätzlicher Markierelemente die Genauigkeit bei der Ermittlung der Position der mobilen Einheit 1 vorgesehen sein kann, um die Genauigkeit bei der Ermittlung eines Sektors zu verbessern und produktionsanlagespezifische Funktionen auf der mobilen Einheit 1 in Abhängigkeit des ermittelten Sektors bereitzustellen.

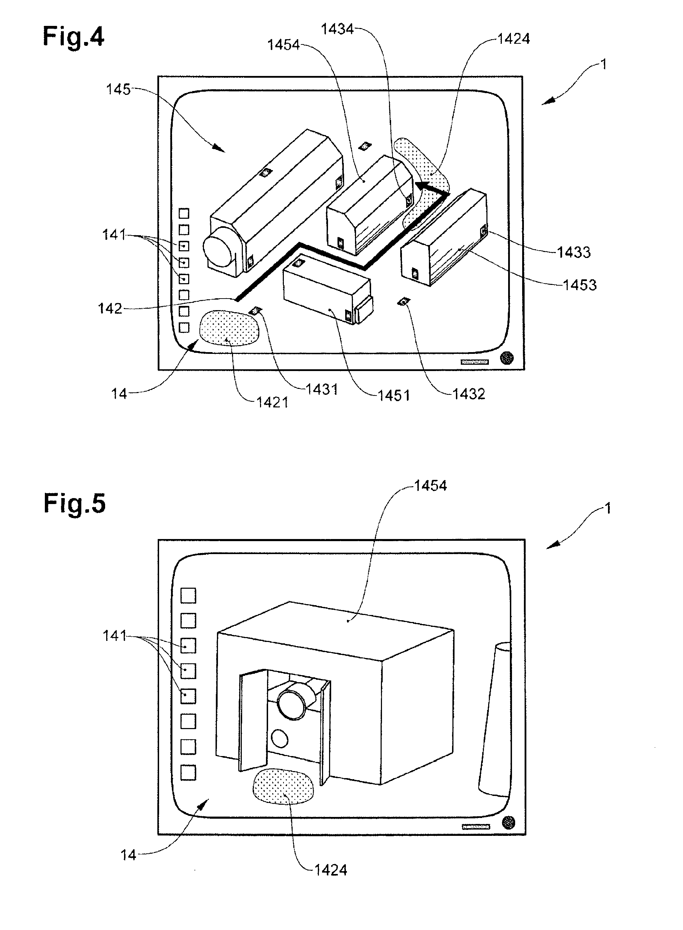

Die Bereitstellung von Funktionen umfasst insbesondere eine den Funktionen angepasste Darstellung von Bildschirminhalten auf einer Anzeige der mobilen Einheit 1. Die Anzeige der mobilen Einheit 1 ist in einer Ausführungsvariante als Touchscreen ausgeführt, wobei zur Auslösung von Funktionen entsprechende Menubefehle selektierbar sind. Figur 4 zeigt eine Anzeige 14 einer mobilen Einheit 1, beispielsweise eines Tabletcomputers, welcher einen berührungsempfindlichen Touchscreen aufweist. Auf der Anzeige 14 ist perspektivisch ein Weg 142 durch eine dreidimensional dargestellte Produktverarbeitungsanlage 145 aufgezeigt, um von einem Ausgangssektor 1421 zu einem Zielsektor 1424 zu gelangen. Am Zielsektor befindet sich beispielsweise eine reparaturbedürftige oder servicebedürftige Einrichtung 1454 einer im Betrieb stehenden Produktverarbeitungsanlage 5, welche der auf der Anzeige dargestellten Produktverarbeitungsanlage 145 zugeordnet ist. Beispielsweise sobald sich der Benutzer der mobilen Einheit 1 beim Ausgangssektor 1421 befindet, wird auf der Anzeige 14 der mobilen Einheit 1 das in Figur 4 dargestellte Bild angezeigt. Der Benutzer erhält dadurch eine Wegleitung, um insbesondere so schnell wie möglich zum Zielsektor 1424 zu gelangen und dort beispielsweise eine Reparatur oder Servicearbeiten durchzuführen. Zur besseren Übersicht für den Benutzer können wie in Figur 4 dargestellt, die Einrichtungen 1451, 1453, 1454 und Markierelemente 1431, 1432, 1433, 1434 auf der Anzeige 14 dargestellt werden. Um die mobile Einheit 1 zu steuern, sind auf der Anzeige 14 verschiedene Menus 141 dargestellt, welche vom Benutzer durch Berührung aktiviert werden können.

Figur 5 zeigt eine Anzeige 14 einer mobilen Einheit 1, beispielsweise eines Tabletcomputers, welcher einen berührungsempfindlichen Touchscreen aufweist. Auf der Anzeige 14 gemäss Figur 5 ist beispielsweise die perspektivische Ansicht der in Figur 4 erwähnten Einrichtung mit Bezugszeichen 1454 dargestellt, wobei wie schematisch in Figur 5 dargestellt für Reparatur- oder Servicearbeiten Türen der erwähnten Einrichtung 1454 geöffnet sind, wobei damit der Benutzer aufgefordert wird, an der Einrichtung der zugeordneten Produktverarbeitungsanlage 5 die entsprechenden Türen zu öffnen. Auf der Anzeige der mobilen Einheit werden Handlungsabläufe dargestellt, welche vom Bedienpersonal auszuführen sind. Die dargestellten Funktionen und/oder Abläufe können beispielsweise die Schritte umfassen, welche bei einer Reparatur oder bei einem Service durchzuführen sind, beispielsweise in einer bildlichen oder animierten Darstellung. Dem Benutzer wird die in Figur 5 dargestellte Ansicht angezeigt, sobald der Benutzer beispielsweise den Zielsektor 1424 erreicht hat. Um die mobile Einheit 1 zu steuern, sind auf der Anzeige 14 weiterhin verschiedene berührungsempfindliche Menus 141 dargestellt. Dem Benutzer wird durch eine Darstellung gemäss Figur 5 eine intuitiv nutzbare Wegleitung gegeben, insbesondere um Reparatur- und Servicearbeiten zu beschleunigen und eine hohe Qualität zu gewährleisten.

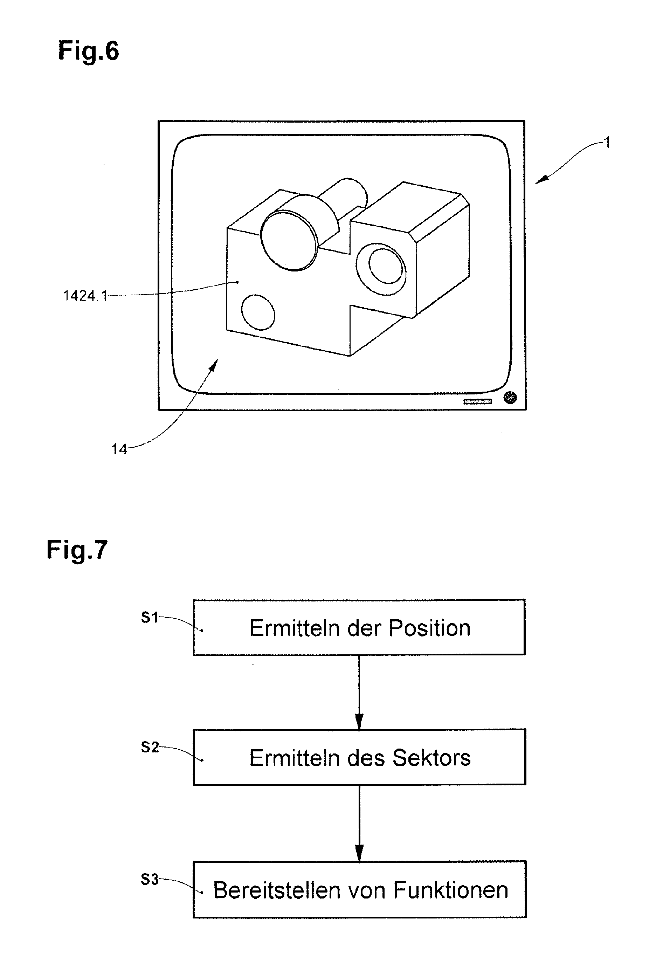

Figur 6 zeigt eine Anzeige 14 einer mobilen Einheit 1, beispielsweise eines Tabletcomputers, welcher einen berührungsempfindlichen Touchscreen aufweist. Auf der Anzeige 14 gemäss Figur 6 ist beispielsweise die perspektivische Ansicht eines Bestandteils 1424.1 der in Figur 5 gezeigten Einrichtung mit Bezugszeichen 1454 dargestellt. Das Bestandteil 1424.1 ist beispielsweise nach dem gemäss Figur 5 gezeigten Öffnen von Türen der Einrichtung mit Bezugszeichen 1454 aus der Einrichtung ausbaubar, um daran Reparatur-oder Servicearbeiten durchzuführen. In einer Ausführungsvariante werden die am Bestandteil 1454.1 durchzuführenden Arbeiten auf der Anzeige 14 der mobilen Einheit 1 Schritt für Schritt dargestellt. Dem Benutzer wird durch eine Darstellung gemäss Figur 6 eine intuitiv nutzbare Wegleitung gegeben, insbesondere um Reparatur- und Servicearbeiten zu beschleunigen und eine hohe Qualität zu gewährleisten.

Die Funktionsmodule der mobilen Einheit 1, insbesondere das Positionsmodul 11, das Sektormodul 12 und das Bereitstellungsmodul 13, sind vorzugsweise als programmierte Softwaremodule ausgeführt, welche Computerprogrammcode umfassen zur Steuerung von einem oder mehreren Prozessoren der mobilen Einheit 1. Der Computerprogrammcode ist auf einem oder mehreren fest oder entfernbar mit den Prozessoren verbundenen (greifbaren) computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

Figur 7 zeigt ein Flussdiagram mit einer Sequenz möglicher Schritte für die Bereitstellung von produktionsanlagespezifischen Funktionen auf einer mobilen Einheit 1. In Schritt S1 wird die Position der mobilen Einheit 1 ermittelt, insbesondere durch ein Positionsmodul 11 der mobilen Einheit 1. In Schritt S2 wird aufgrund der ermittelten Position der mobilen Einheit 1 ein Sektor 2.1, 2.2, 2.3, 2.4 ermittelt aus mehreren nicht überlappenden Sektoren 2.1, 2.2, 2.3, 2.4 der Produktverarbeitungsanlage 5, insbesondere durch ein Sektormodul 12 der mobilen Einheit 1. In Schritt S3 werden in Abhängigkeit des ermittelten Sektors 2.1, 2.2, 2.3, 2.4 produktionsanlagespezifische Funktionen auf der mobilen Einheit 1 bereitgestellt, insbesondere durch ein Bereitstellungsmodul 13 der mobilen Einheit 1.

## Patentansprüche

1. Eine mobile Einheit (1), welche produktionsanlagespezifische Funktionen bereitstellt, umfassend:
ein Positionsmodul (11), welches eingerichtet ist, eine räumliche Position der mobilen Einheit (1) zu ermitteln,
ein Sektormodul (12), welches eingerichtet ist, um aufgrund der ermittelten Position der mobilen Einheit (1) einen Sektor (2.1, 2.2, 2.3, 2.4) zu ermitteln aus mehreren nicht überlappenden Sektoren (2.1, 2.2, 2.3, 2.4) der Produktionsanlage, und
ein Bereitstellungsmodul (13), welches eingerichtet ist, die produktionsanlagespezifischen Funktionen der mobilen Einheit (1) in Abhängigkeit des ermittelten Sektors (2.1, 2.2, 2.3, 2.4) bereitzustellen.

2. Die mobile Einheit (1) nach Anspruch 1, **dadurch gekennzeichnet, dass** das Positionsmodul (11) eingerichtet ist die Position der mobilen Einheit (1) zu ermitteln aufgrund von mittels elektromagnetischer Wellen aktivierbaren und detektierbaren, verteilten Markierelementen (3.1, 3.2, 3.3) wie insbesondere RFID-Tags oder Tags einer NFC Technologie.

3. Die mobile Einheit (1) nach Anspruch 1 oder 2, **dadurch gekennzeichnet, dass** das Positionsmodul (11) eingerichtet ist die Position der mobilen Einheit (1) zu ermitteln aufgrund einer Veränderung einer Sendeleistung eines Senders zur Ausstrahlung einer elektromagnetischen Welle.

4. Die mobile Einheit (1) nach einem der Ansprüche 1 bis 3, **dadurch gekennzeichnet, dass** das Positionsmodul (11) eingerichtet ist die Position der mobilen Einheit (1) zu ermitteln aufgrund einer Veränderung einer Frequenz eines Senders zur Ausstrahlung einer elektromagnetischen Welle.

5. Die mobile Einheit (1) nach einem der Ansprüche 1 bis 4, **dadurch gekennzeichnet, dass** das Positionsmodul (11) eingerichtet ist die Position der mobilen Einheit (1) zu ermitteln aufgrund von einer oder mehreren der folgenden Einrichtungen: ein GPS-Modul, eine GSM Ortungseinrichtung, eine UMTS Ortungseinrichtung, eine WLAN basierte Ortungseinrichtung.

6. Die mobile Einheit (1) nach einem der Ansprüche 1 bis 5, **dadurch gekennzeichnet, dass** eine oder mehrere der folgenden Daten ganz oder teilweise auf der mobilen Einheit (1) abgespeichert sind: Definitionsdaten für nicht überlappende Sektoren (2.1, 2.2, 2.3, 2.4) der Produktionsanlage, Positionsdaten von Markierelementen (3.1, 3.2, 3.3), Standorte von Einrichtungen (5.1, 5.2, 5.3) der Produktionsanlage, Funktionen von Einrichtungen (5.1, 5.2, 5.3) der Produktionsanlage.

7. Die mobile Einheit (1) nach einem der Ansprüche 1 bis 6, **dadurch gekennzeichnet, dass** bereitgestellte, produktionsanlagespezifische Funktionen der mobilen Einheit (1) eine oder mehrere der folgenden Funktionen umfasst: Darstellung einer auf einem Touchscreen bedienbaren Benutzerschnittstelle zur menugeführten Steuerung von Einrichtungen der Produktionsanlage, Anzeige von Zustandsdaten von Einrichtungen der Produktionsanlage, Anzeige von Serviceanleitungen von Einrichtungen der Produktionsanlage, Anzeige von Reparaturanleitungen von Einrichtungen der Produktionsanlage, Anzeige von Wegleitungsinformationen zum Auffinden von Einrichtungen der Produktionsanlage.

8. Die mobile Einheit (1) nach einem der Ansprüche 1 bis 7, **dadurch gekennzeichnet, dass** bereitgestellte, produktionsanlagespezifische Funktionen eine bildliche und/oder animierte Darstellung von Handlungsabläufen umfassen, welche von einem Benutzer an der Produktionsanlage durchzuführen sind.

9. Die mobile Einheit (1) nach einem der Ansprüche 1 bis 8, **dadurch gekennzeichnet, dass** sich die bereitgestellten Funktionen auf eine oder mehrere der folgenden Produktionsanlagen beziehen: Logistikanlage, Versandhausanlage, Produktionsfliessband, Produktverarbeitungsanlage für vereinzelbare Produkte, insbesondere flächige, flexible Produkte, Druckproduktverarbeitungsanlage, Versandraum für Druckprodukte.

10. Verfahren um auf einer mobilen Einheit (1) produktionsanlagespezifische Funktionen bereitzustellen, umfassend:
Ermitteln einer räumlichen Position der mobilen Einheit (1),
Ermitteln eines Sektors (2.1, 2.2, 2.3, 2.4) aufgrund der ermittelten Position der mobilen Einheit (1) aus mehreren nicht überlappenden Sektoren (2.1, 2.2, 2.3, 2.4) der Produktionsanlage, und
Bereitstellen von produktionsanlagespezifischen Funktionen der mobilen Einheit (1) in Abhängigkeit des ermittelten Sektors (2.1, 2.2, 2.3, 2.4).

11. Verfahren nach Anspruch 10, **dadurch gekennzeichnet, dass** die Position der mobilen Einheit (1) aufgrund von mittels elektromagnetischer Wellen aktivierbaren und detektierbaren, verteilten Markierelementen (3.1, 3.2, 3.3) wie insbesondere RFID-Tags oder Tags einer NFC Technologie ermittelt wird.

12. Verfahren nach Anspruch 10 oder 11, **dadurch gekennzeichnet, dass** eine Sendeleistung eines Senders zur Ausstrahlung einer elektromagnetischen Welle verändert wird, um die Position der mobilen Einheit (1) zu ermitteln.

13. Verfahren nach einem der Ansprüche 10 bis 12, **dadurch gekennzeichnet, dass** eine Frequenz eines Senders zur Ausstrahlung einer elektromagnetischen Welle verändert wird, um die Position der mobilen Einheit (1) zu ermitteln.

14. Verfahren nach einem der Ansprüche 10 bis 13, **dadurch gekennzeichnet, dass** die Position der mobilen Einheit (1) aufgrund von einer oder mehreren der folgenden Einrichtungen ermittelt wird: ein GPS-Modul, eine GSM Ortungseinrichtung, eine UMTS Ortungseinrichtung, eine WLAN basierte Ortungseinrichtung.

15. Verfahren nach einem der Ansprüche 10 bis 14, **dadurch gekennzeichnet, dass** eine oder mehrere der folgenden Daten ganz oder teilweise auf der mobilen Einheit (1) abgespeichert werden: Definitionsdaten für nicht überlappende Sektoren (2.1, 2.2, 2.3, 2.4) der Produktionsanlage, Positionsdaten von Markierelementen (3.1, 3.2, 3.3), Standorte von Einrichtungen (5.1, 5.2, 5.3) der Produktionsanlage, Funktionen von Einrichtungen (5.1, 5.2, 5.3) der Produktionsanlage.

16. Verfahren nach einem der Ansprüche 10 bis 15, **dadurch gekennzeichnet, dass** produktionsanlagespezifische Funktionen auf der mobilen Einheit (1) bereitgestellt werden welche eine oder mehrere der folgenden Funktionen umfassen: Darstellung einer auf einem Touchscreen bedienbaren Benutzerschnittstelle zur menugeführten Steuerung von Einrichtungen der Produktionsanlage, Anzeige von Zustandsdaten von Einrichtungen der Produktionsanlage, Anzeige von Serviceanleitungen von Einrichtungen der Produktionsanlage, Anzeige von Reparaturanleitungen von Einrichtungen der Produktionsanlage, Anzeige von Wegleitungsinformationen zum Auffinden von Einrichtungen der Produktionsanlage.

17. Verfahren nach einem der Ansprüche 10 bis 16, **dadurch gekennzeichnet, dass** produktionsanlagespezifische Funktionen bereitgestellt werden, welche eine bildliche und/oder animierte Darstellung von Handlungsabläufen umfassen, die von einem Benutzer an der Produktionsanlage durchzuführen sind.

18. Verfahren nach einem der Ansprüche 10 bis 17, **dadurch gekennzeichnet, dass** Funktionen bereitgestellt werden, welche sich auf eine oder mehrere der folgenden Produktionsanlagen beziehen: Logistikanlage, Versandhausanlage, Produktionsfliessband, Produktverarbeitungsanlage für vereinzelbare Produkte, insbesondere flächige, flexible Produkte, Druckproduktverarbeitungsanlage, Versandraum für Druckprodukte.

19. Computerprogrammprodukt, umfassend ein greifbares computerlesbares Speichermedium mit gespeichertem Computercode, welcher eingerichtet ist, einen oder mehrere Prozessoren einer mobilen Einheit (1) zu steuern zur Bereitstellung von produktionsanlagespezifische Funktionen auf der mobilen Einheit (1), wobei der Computercode die mobile Einheit (1) so steuert, dass:
die räumliche Position der mobilen Einheit (1) ermittelt wird,
ein Sektor (2.1, 2.2, 2.3, 2.4) ermittelt wird aufgrund der ermittelten Position der mobilen Einheit (1) aus mehreren nicht überlappenden Sektoren (2.1, 2.2, 2.3, 2.4) der Produktionsanlage, und
produktionsanlagespezifische Funktionen auf der mobilen Einheit (1) bereitgestellt werden in Abhängigkeit des ermittelten Sektors (2.1, 2.2, 2.3, 2.4).
